# EUROPEAN PATENT SPECIFICATION

(11) **EP 3 670 167 B1**
(45) Date of publication and mention of the grant of the patent: **22.06.2022**
(21) Application number: 19217311.0
(22) Date of filing: 18.12.2019
(51) Int. Cl.: B29D 30/48

(54) **METHOD FOR FORMING A TIRE COMPONENT AND TIRE COMPONENT**
VERFAHREN ZUR HERSTELLUNG EINER REIFENKOMPONENTE UND REIFENKOMPONENTE
PROCÉDÉ DE FORMATION D'UN COMPOSANT DE PNEUMATIQUE ET COMPOSANT DE PNEUMATIQUE

(30) Priority: 19.12.2018 US 201862781781 P; 22.10.2019 US 201916659859
(43) Date of publication of application: 24.06.2020
(73) Proprietor: The Goodyear Tire & Rubber Company, Akron, OH 44316 (US)
(72) Inventor: CHEN, Hongbing, Broadview Heights, OH 44147 (US); DYRLUND, Christopher David, Canton, OH 44705 (US); BALDAN, Adam Mark, Akron OH 44303 (US)
(74) Representative: Kutsch, Bernd

(56) References cited:
- EP-A1- 3 112 143
- EP-A2- 0 970 797
- US-A1- 2012 160 391

## Description

### Field of the Invention

The invention relates in general to tire manufacturing, and more particularly to methods for forming an improved tire component such as an apex for a pneumatic tire, and to a respective tire component or apex.

### Background of the Invention

A conventional radial-ply automobile tire includes radial plies that are wrapped around two annular inextensible beads. The portions of the plies that extend beyond the beads are turned up around the beads, forming "turn-ups." An annular rubber filler bounded by the turned-up ply and the bead is called an "apex." The choice of dimensions and material properties of the apex affects the performance of the tire, such as tire weight, sidewall stiffness, handling, ride comfort, flexural heat, material fatigue, and tire life.

It is desired to have an improved method and apparatus for forming an apex without a splice in order to improve tire uniformity and consistency.

Thus, it is desired to have an improved method and apparatus for making an improved apex that is made of multiple compounds in desired ratios in order to improve the tire's performance attributes previously mentioned. It is further desired to have an improved method and apparatus for making an improved apex that has a continuously variable ratio of two different compounds, which avoids a discrete change from one compound to another.

EP 3 112 143 A1 describes a method in accordance with the preamble claims 1 or 13 respectively, and a tire in accordance with the preamble of claim 15.

EP 0 970 797 A3 discloses a method and an apparatus for the lamination of band-shaped uncured rubber materials comprising different rubber materials.

US 2012/0160391 A1 discloses a tire apex having a section made of a first rubber material and another section made of a second rubber material.

### Summary of the Invention

The invention relates to a method in accordance with claim 1 or 13 respectively, and to a tire component in accordance with claim 15.

Dependent claims refer to preferred embodiments of the invention.

In one aspect of the invention, a method for forming a composite apex is provided, the method comprising the steps of: forming a coextruded strip, wherein the coextruded strip is of a first compound and a second compound or comprises said first compound and said second compound, wherein the second compound is a compound different from the first compound; and winding the coextruded strip while varying the ratio of the volume of the first compound to the volume of the second compound in the coextruded strip when forming the composite apex.

In another aspect of the invention, a method for forming a tire component is provided, preferably a tire apex. The method comprises the steps of: providing a tire building drum or a green tire carcass structure being shaped; forming a coextruded strip, wherein the coextruded strip is of a first compound and a second compound or comprises said first compound and said second compound, wherein the second compound is a compound different from the first compound; and winding the coextruded strip onto the tire building drum or the green tire carcass structure being shaped while varying the ratio of the volume of the first compound to the volume of the second compound in the coextruded strip when forming the tire component.

In another aspect of the invention, a tire component such as a tire apex is provdied, wherein the tire component is formed from windings a coextruded strip, wherein the coextruded strip is of a first compound and a second compound or comprises said first compound and said second compound, wherein the second compound is a compound different from the first compound, and wherein the ratio of the volume of the first compound to the volume of the second compound in the coextruded strip varies (such as stepwise or continuously) along or across the tire component, i.e. is different at different locations of the tire component.

In another aspect of the invention, a method for forming a composite apex is provided, the method comprising the steps of: forming a coextruded strip of a first compound and a second compound, wherein the second compound is a compound different than the first compound, wherein the apex is formed from winding the coextruded strip while varying the ratio of the first compound to the second compound.

In yet another aspect of the invention, a method for forming a tire component is provided, the method comprising the steps of: providing a tire or tire component, forming a coextruded strip of a first compound and a second compound, wherein the second compound is a compound different than the first compound, wherein the tire component is formed from winding the coextruded strip onto the tire building drum while varying the ratio of the first compound to the second compound.

In a preferred aspect of the invention, the first compound is a rubber compound and the second compound is a rubber compound.

In a preferred aspect of the invention, the ratio of the volume of the first compound to the volume of the second compound in the coextruded strip is changed stepwise or continuously during the winding.

In a preferred aspect of the invention, a radially inner portion of the apex, i.e. a portion of the apex close to the tire bead core, is formed from a coextruded strip having from 100% to 90%, preferably 95%, of the first compound and from 0% to 10%, preferably 5%, of the second compound, and/or wherein a radially outer portion of the apex, i.e. a portion distant from the tire bead core, is formed from a coextruded strip having from 100% to 90%, preferably 100%, of the second compound and from 0% to 10%, preferably 0%, of the first compound.

In a preferred aspect of the invention, the apex or tire component is formed from a dual layer of strip lamination.

In a preferred aspect of the invention, the second compound is selected for high stiffness and/or has a higher G' value than the first compound.

In a preferred aspect of the invention, the coextruded strip is formed by: extruding the first compound through a first extruder and a first gear pump and into a first passageway of a coextrusion nozzle; extruding the second compound through a second extruder and a second gear pump and into a second passageway of the coextrusion nozzle; and joining together the first and second compound in the respective first and second passageway upstream, preferably immediately upstream, of a die outlet of the coextrusion nozzle.

In a preferred aspect of the invention, the coextrusion nozzle has an insert, preferably a removable insert, which divides the nozzle into the first passageway and into the second, separate passageway. Preferably, the insert has a distal end for positioning the distal end adjacent the die outlet of the coextrusion nozzle. The distal end has an elongated flat portion or nose.

In a preferred aspect of the invention, the ratio of the volume of the first compound to the volume of the second compound in the coextruded strip is varied by changing the ratio of the speed of the first gear pump to the second gear pump.

In a preferred aspect of the invention, the coextruded strip is formed in a continuous manner and/or is applied during the winding in a continuous manner.

In a preferred aspect of the invention, the coextruded strip is applied in a continuous manner to a tire building machine such as a tire building drum or to a green tire carcass structure being shaped, i.e. that is in the process of being built or established.

In a preferred aspect of the invention, the second compound consists of or comprises a rubber composition having a shear storage modulus G' measured at 1% strain, 1 Hz and 100ºC according to ASTM D5289 above 15 MPa, more preferably in a range of from 18 to 32 MPa or 23 to 31 MPa.

In a preferred aspect of the invention, the first compound consists of or comprises a rubber composition having a shear storage modulus G' measured at 1% strain, 1 Hz and 100ºC according to ASTM D5289 below 12 MPa, more preferably in a range of from 1.2 to 10 MPa or 1.4 to 2.3 MPa.

In a preferred aspect of the invention, the ratio of the speed of the first gear pump to the second gear pump may be varied during operation of the system.

In a preferred aspect of the invention, the insert has a rectangular cross-sectional shape.

In a preferred aspect of the invention, the radially outer strip windings have an axis X-X oriented in the radial direction.

### Definitions

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Circumferential" means lines or directions extending along the perimeter of the surface of the annular tread perpendicular to the axial direction.

"Radial" and "radially" mean directions radially toward or away from the axis of rotation of the tire.

"Tangent delta", or "tan delta," is a ratio of the shear loss modulus, also known as G", to the shear storage modulus, also known as G'. These properties, namely the G', G" and tan delta, characterize the viscoelastic response of a rubber test sample to a tensile deformation at a fixed frequency and temperature, measured at 100ºC.

"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1A shows a meridional cross-section of a radial ply pneumatic tire according to the present invention;
FIG. 1B shows a cross-section of the bead section of FIG. 1A;
FIG. 2A is a perspective view of a coextruded strip of 90% of a first compound and 10% of a second compound of the present invention;
FIG. 2B is a perspective view of a coextruded strip of 95% of a first compound and 5% of a second compound;
FIG. 3 is a cross-sectional view of a composite apex of the present invention;
FIG. 4 is a perspective view of a dual compound apparatus for forming a coextruded strip onto a tire building drum;
FIG. 5 is a cross-sectional view of the dual compound apparatus of FIG. 4; and
FIG. 6 is a perspective cutaway view of a coextrusion nozzle of the present invention, while FIG. 7 is a side cross-sectional view of the coextrusion nozzle of FIG. 6.

### Detailed Description of Example Embodiments the Invention

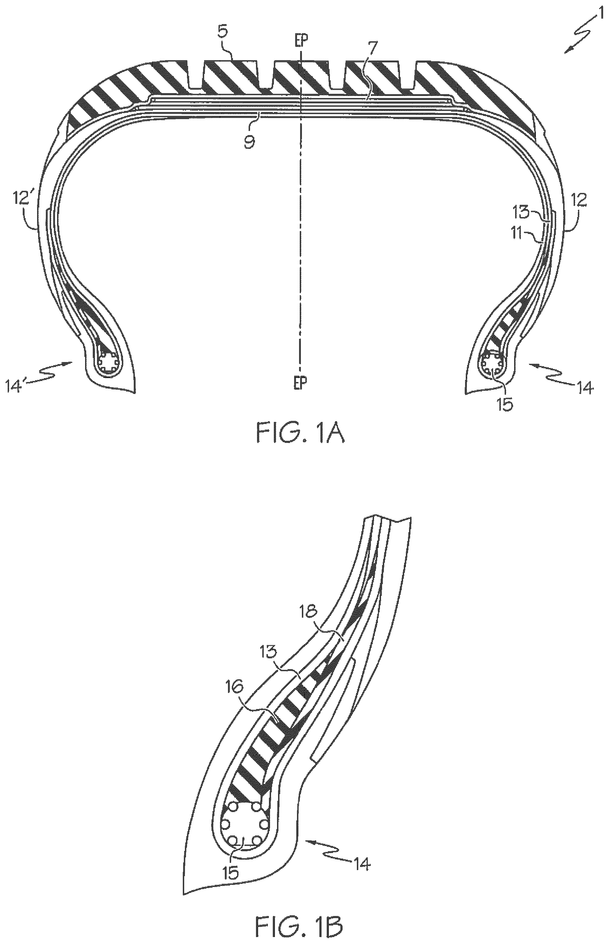

FIG. 1A illustrates a cross-sectional view of a pneumatic tire 1 having a tread 5, a belt structure comprising one or more belts 7, and a carcass 9. The carcass 9 has an innerliner 11, at least one ply, preferably a radial ply 13, two sidewalls 12, 12', and two opposed bead areas 14, 14' preferably having an annular bead wire 15 or bead core. FIG. 1B shows a cross-section of the bead areas 14, 14' of FIG. 1A. The bead areas 14, 14' have an axially inner apex 16 formed of a first material and an axially outer apex 18 formed of a second material different from the first material. Thus, in this example of a prior art apex configuration, two different apexes are used having different stiffness properties in order to have the desired overall properties.

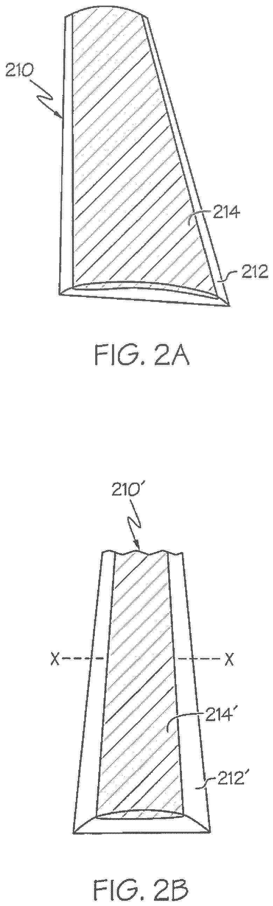

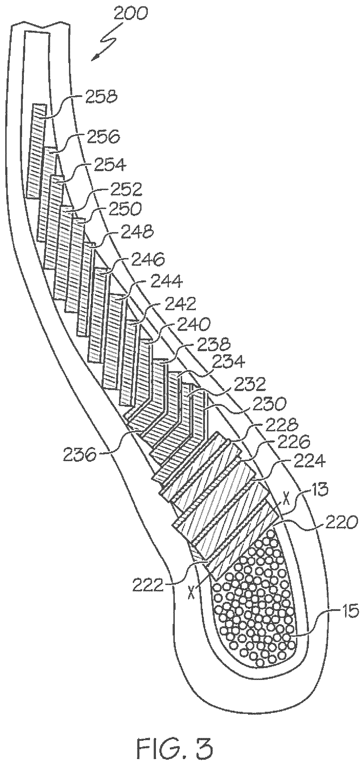

FIG. 3 illustrates a cross-sectional view of an apex profile 200 of the present invention that can be substituted with the apexes of FIG. 1A and FIG. 1B. The apex 200 is formed by strip lamination or by winding a continuous coextruded strip 210 of two discrete layers of green rubber onto a tire building drum 19 or a shaped green carcass. The continuous coextruded dual strip 210 is shown in FIG. 2A and is preferably a dual layer of a first rubber compound 212 and second rubber compound 214, wherein each rubber compound has different properties. Each strip 210 has an axis X-X.

The first layer 212 is formed from a first rubber compound which is typically used to form an apex. The second compound is preferably a rubber compound preferably having high stiffness properties. The first and second rubber compounds of the strip are formed in discrete layers 212, 214, and thus are not mixed together.

The first layer thickness of the first compound in the coextruded strip 210 is preferably in the range of from 0.3 mm to 2 mm, and more preferably in the range of from 0.6 to 1.2 mm.

The second layer thickness of the second compound is preferably in the range of from 0.01 mm to 0.2 mm, more preferably 0.01 mm to 0.1 mm.

The overall width of the strip 230 is preferably in the range of from 10 mm to 50 mm, more preferably 20 to 40 mm.

The coextruded strip 210 shown in FIG. 2A is preferably a dual layer strip of a first layer 212 having a ratio of 90% of the first compound for instance. The dual layer strip 210 has a second layer 214 having a ratio of 10% of the second compound for instance.

FIG. 2B illustrates a a dual layer strip 210' having a first layer 212' formed of the first compound and a second layer 214' formed of the second compound, wherein the dual layer strip has a ratio of 95% of the first compound for instance to 5% of the second compound for instance.

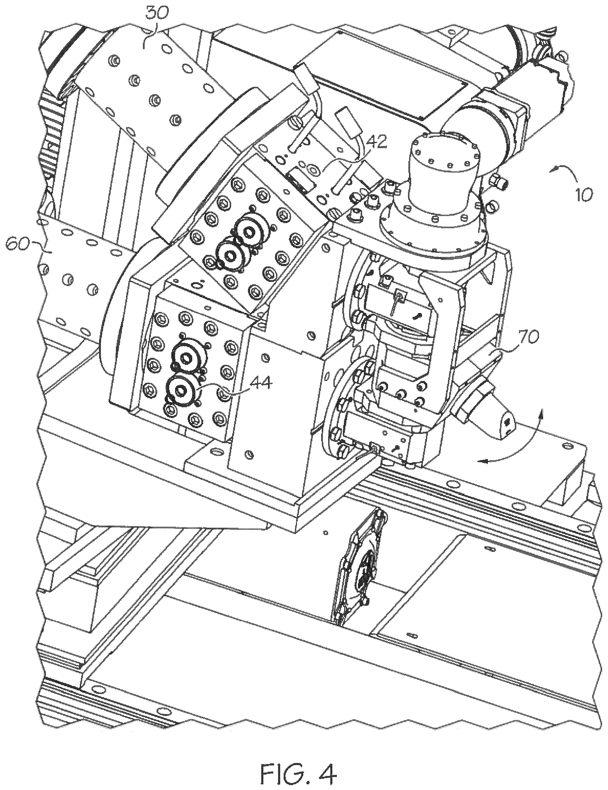

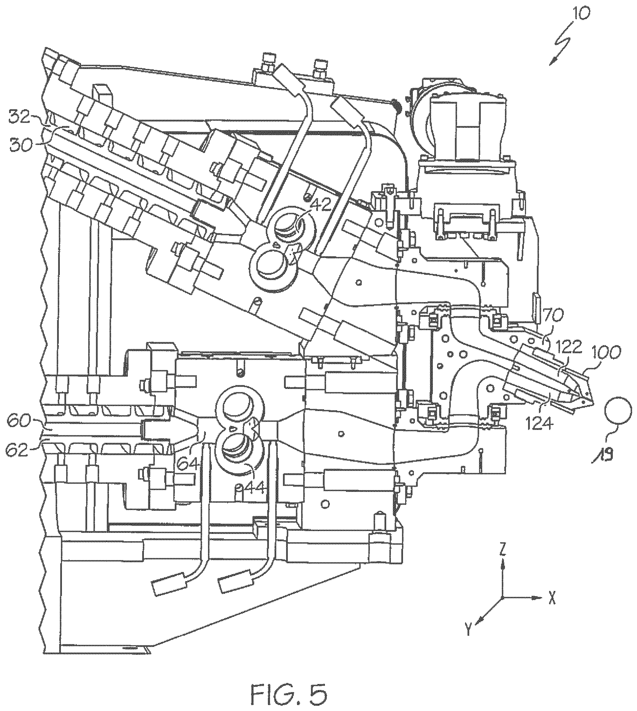

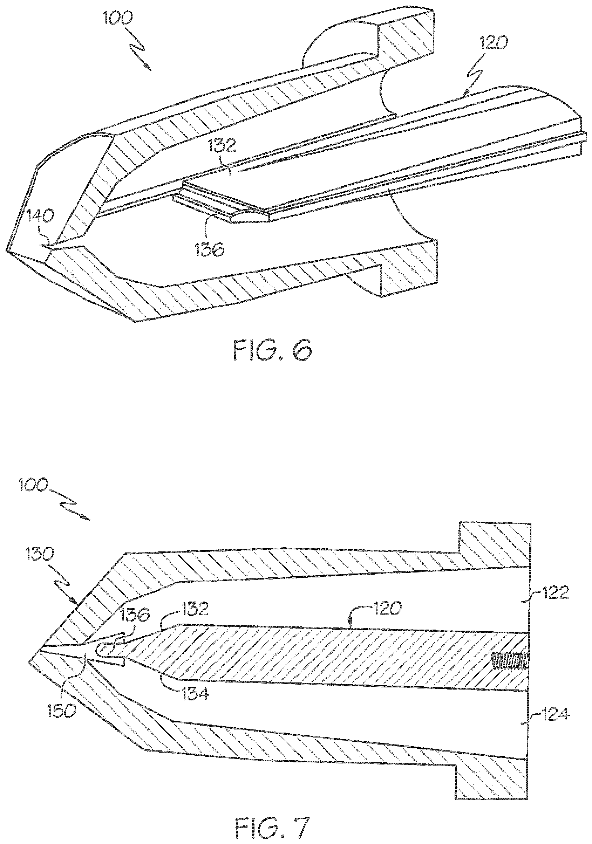

The apparatus used to form the continuous coextruded strip is described in the paragraphs below and is shown in FIGS. 4-7. The apparatus can form the coextruded strip while instantaneously varying the ratio of the first compound to the second compound.

The coextruded strip forming apparatus 10 is used to form the desired apex profile 200 shown in FIG. 3 by rotating the drum 19 (or carcass) and then applying a continuous coextruded strip 210 by continuously winding the strip directly onto the tire carcass or drum.

As shown in FIG. 3, the annular strip windings 220, 222, 224 are overlapped or stacked in the radial direction. In the strip windings nearest the bead core, preferably the first three step windings 220, 222, 224, have a strip composition preferably in the range of from 90% to 100% of the first compound, while the second compound is preferably in the range of from 0% to 10% by volume of the strip. The midportion of the apex which correspond to strip windings 226, 228, 230, 232, 234, 236, the strip composition is preferably 50% of the first compound and 50% of the second compound. The radially outer portion of the apex that is radially outward of the midportion corresponds to strip windings 238, 240, 242, 244, the strip composition is preferably 80% of the first compound, and 20% of the second compound. The radially outermost portion of the apex that corresponds to strip windings 246, 248, 250, 252, 254, 256, 258, the strip is preferably 100% of the first compound.

The stiffness may be **characterized by** the storage modulus G', which are sometimes referred to as the "shear storage modulus" or "dynamic modulus". Reference is made to Science and Technology of Rubber, second edition, 1994, Academic Press, San Diego, Calif., edited by James E. Mark et al, pages 249-254.

The shear storage modulus (G') values are indicative of rubber compound stiffness which can relate to tire performance. The tan delta value at 100 ºC is considered as being indicative of hysteresis, or heat loss.

In a first embodiment, the second rubber compound comprises a stiff rubber composition having a shear storage modulus G' measured at 1% strain, 1 Hz and 100 ºC according to ASTM D5289 ranging from 18 to 32 MPa, and the first rubber compound comprises a rubber composition having a shear storage modulus G' measured at 1% strain, 1 Hz and 100 ºC according to ASTM D5289 ranging from 1.2 to 10 MPa.

The dynamic storage modulus (G') and also the dynamic loss modulus (G") are measurements of the viscoelastic properties of rubber compounds and have been obtained using a Rubber Process Analyzer as RPA 2000^{™} from the Alpha Technologies.

In a more preferred embodiment, the second rubber compound comprises a rubber composition having a shear storage modulus G' measured at 1% strain, 1 Hz and 100 ºC according to ASTM D5289 ranging from 23 to 31 MPa, and the first rubber compound comprises a rubber composition having a shear storage modulus G' measured at 1% strain, 1 Hz and 100 ºC according to ASTM D5289 ranging from 1.4 to 2.3 MPa.

### Coextruded Strip Forming Apparatus

As shown in FIGS. 4-7, the coextruded strip forming apparatus 10 includes a first extruder 30 and a second extruder 60, preferably arranged side by side in close proximity. The first extruder 30 has an inlet 32 for receiving a first rubber composition A, while the second extruder 60 has an inlet 62 for receiving a second rubber composition B. Each extruder functions to warm up the rubber composition to the temperature in the range of from 80°C to 150°C, preferably 90°C to 120°C, and to masticate the rubber composition as needed. The coextruded strip forming apparatus 10 is mounted upon a translatable support bar 16, that can translate fore and aft in relation to a tire building drum 19 or a part of a tire building machine.

The first compound is extruded by the first extruder 30 and then pumped by the first gear pump 42 into a nozzle 100, while at the same time the second compound is extruded by the second extruder 60 and then pumped by the second gear pump 44 into the coextrusion nozzle 100.

The coextrusion nozzle 100 has a removable insert 120 that functions to divide the nozzle into a first and second flow passageway 122, 124. The removable insert 120 is preferably rectangular in cross-sectional shape. The removable insert 120 has a distal end 130 with tapered ends 132, 134 forming a nose 136. The nose 136 is positioned adjacent the nozzle die exit 140 and spaced a few millimeters from the die exit 140. The region between the nose 136 and the die exit 140 is a low volume coextrusion zone 150 that is high pressure. In the low volume coextrusion zone 150, the first compound flowstream 122 merges with the second compound flowstream 124 forming two discrete layers 212, 214 joined together at an interface 215.

The coextrusion nozzle 100 is preferably mounted upon a rotatable head 70.

The volume ratio of the first compound to the second compound may be changed by varying the ratio of the speed of the first gear pump of the first compound to the speed of the second gear pump of the second compound. The dual coextruded strip forming apparatus 10 can adjust the speed ratios on the fly, and due to the small residence time of the coextrusion nozzle, the apparatus has a fast response to a change in the compound ratios. This is due to the low volume of the coextrusion zone.

## Claims

1. A method for forming a composite apex, the method comprising the steps of:
forming a coextruded strip (210), wherein the coextruded strip (210) is of a first compound (212) and a second compound (214) or comprises said first compound (212) and said second compound (214), wherein the second compound (214) is a compound different from the first compound (212); and
winding the coextruded strip (210);
**characterized by**
winding the coextruded strip (210) while varying the ratio of the volume of the first compound (212) to the volume of the second compound (214) in the coextruded strip (210) when forming the apex (200).

2. The method of claim 1 wherein the first compound (212) is a rubber compound and the second compound (214) is a rubber compound.

3. The method of claim 1 or 2 wherein the ratio of the volume of the first compound (212) to the volume of the second compound (214) in the coextruded strip (210) is changed stepwise or continuously during the winding.

4. The method of at least one of the previous claims wherein a radially inner portion of the apex (200) is formed from a coextruded strip (210) having from 100% to 90%, preferably 95%, of the first compound (212) and from 0% to 10%, preferably 5%, of the second compound (214), and/or wherein a radially outer portion of the apex (200) is formed from a coextruded strip (210) having from 100% to 90%, preferably 100%, of the second compound (214) and from 0% to 10%, preferably 0%, of the first compound (212).

5. The method of at least one of the previous claims wherein the apex (200) is formed from a dual layer of strip lamination.

6. The method of at least one of the previous claims wherein the second compound (214) is selected for high stiffness and/or has a higher G' value than the first compound (212).

7. The method of at least one of the previous claims wherein the coextruded strip (210) is formed by:
extruding the first compound (212) through a first extruder (30) and a first gear pump (42) and into a first passageway (122) of a coextrusion nozzle (100);
extruding the second compound (214) through a second extruder (60) and a second gear pump (44) and into a second passageway (124) of the coextrusion nozzle (100); and
joining together the first and second compound (212, 214) in the respective first and second passageway (122, 124) upstream, preferably immediately upstream, of a die outlet (140) of the coextrusion nozzle (100).

8. The method of claim 7 wherein the coextrusion nozzle (100) has an insert (120), preferably a removable insert (120), which divides the nozzle (100) into the first passageway (122) and into the second, separate passageway (124), the insert (120) preferably having a distal end (130) for positioning the distal end (130) adjacent the die outlet (130) of the coextrusion nozzle (150), the distal end (130) having an elongated flat portion or nose (136).

9. The method of at least one of the previous claims wherein the ratio of the volume of the first compound (212) to the volume of the second compound (214) in the coextruded strip (210) is varied by changing the ratio of the speed of the first gear pump (42) to the second gear pump (44).

10. The method of at least one of the previous claims wherein the coextruded strip (210) is formed in a continuous manner and/or is applied during the winding in a continuous manner.

11. The method of at least one of the previous claims wherein the coextruded strip (210) is applied in a continuous manner to a tire building machine such as a tire building drum (19) or to a green tire carcass structure being shaped.

12. The method of at least one of the previous claims wherein the second compound (214) comprises a rubber composition having a shear storage modulus G' measured at 1% strain, 1 Hz and 100ºC according to ASTM D5289 in a range of from 23 to 31 MPa; and/or wherein the first compound (212) comprises a rubber composition having a shear storage modulus G' measured at 1% strain, 1 Hz and 100ºC according to ASTM D5289 in a range of from 1.4 to 2.3 MPa.

13. A method for forming a tire component, preferably a tire apex (200), the method comprising the steps of:
providing a tire building drum (19) or a green tire carcass structure being shaped;
forming a coextruded strip (210), wherein the coextruded strip (210) is of a first compound (212) and a second compound (214) or comprises said first compound (212) and said second compound (214), wherein the second compound (214) is a compound different from the first compound (212); and
winding the coextruded strip (210) onto the tire building drum (19) or the green tire carcass structure being shaped;
**characterized by**
winding the coextruded strip (210) onto the tire building drum (19) or the green tire carcass structure being shaped while varying the ratio of the volume of the first compound (212) to the volume of the second compound (214) in the coextruded strip (210) when forming the tire component.

14. The method of at least one of the previous claims wherein the second compound (214) comprises a rubber composition having a shear storage modulus G' measured at 1% strain, 1 Hz and 100ºC according to ASTM D5289 in a range of from 23 to 31 MPa; and/or wherein the first compound (212) comprises a rubber composition having a shear storage modulus G' measured at 1% strain, 1 Hz and 100ºC according to ASTM D5289 in a range of from 1.4 to 2.3 MPa

15. A tire component such as a tire apex (200), wherein the tire component is formed from windings a coextruded strip (210), wherein the coextruded strip (210) is of a first compound (212) and a second compound (214) or comprises said first compound (212) and said second compound (214), wherein the second compound (214) is a compound different from the first compound (212), **characterized in that** the ratio of the volume of the first compound (212) to the volume of the second compound (214) in the coextruded strip (210) varies along the tire component.

## Patentansprüche

1. Verfahren zum Ausbilden eines zusammengesetzten Kernprofils, wobei das Verfahren die folgenden Schritte umfasst:
Ausbilden eines koextrudierten Streifens (210), wobei der koextrudierte Streifen (210) aus einer ersten Verbindung (212) und einer zweiten Verbindung (214) besteht oder die erste Verbindung (212) und die zweite Verbindung (214) umfasst, wobei die zweite Verbindung (214) eine Verbindung ist, die sich von der ersten Verbindung (212) unterscheidet; und
Aufwickeln des koextrudierten Streifens (210);
**gekennzeichnet durch**
Aufwickeln des koextrudierten Streifens (210), während das Verhältnis des Volumens der ersten Verbindung (212) zu dem Volumen der zweiten Verbindung (214) in dem koextrudierten Streifen (210) variiert wird, wenn das Kernprofil (200) ausgebildet wird.

2. Verfahren nach Anspruch 1, wobei die erste Verbindung (212) eine Kautschukverbindung ist und die zweite Verbindung (214) eine Kautschukverbindung ist.

3. Verfahren nach Anspruch 1 oder 2, wobei das Verhältnis des Volumens der ersten Verbindung (212) zu dem Volumen der zweiten Verbindung (214) in dem koextrudierten Streifen (210) während des Wickelns schrittweise oder kontinuierlich geändert wird.

4. Verfahren nach wenigstens einem der vorhergehenden Ansprüche, wobei ein radial innerer Abschnitt des Kernprofils (200) aus einem koextrudierten Streifen (210) ausgebildet ist, der von 100 % bis 90 %, bevorzugt 95 %, der ersten Verbindung (212) und von 0 % bis 10 %, bevorzugt 5 %, der zweiten Verbindung (214) aufweist, und/oder wobei ein radial äußerer Abschnitt des Kernprofils (200) aus einem koextrudierten Streifen (210) ausgebildet ist, der von 100 % bis 90 %, bevorzugt 100 %, der zweiten Verbindung (214) und von 0 % bis 10 %, bevorzugt 0 %, der ersten Verbindung (212) aufweist.

5. Verfahren nach wenigstens einem der vorhergehenden Ansprüche, wobei das Kernprofil (200) aus einer zweilagigen Streifenlaminierung ausgebildet ist.

6. Verfahren nach wenigstens einem der vorhergehenden Ansprüche, wobei die zweite Verbindung (214) für eine hohe Steifigkeit ausgewählt wird und/oder einen höheren G'-Wert als die erste Verbindung (212) aufweist.

7. Verfahren nach wenigstens einem der vorhergehenden Ansprüche, wobei der koextrudierte Streifen (210) durch Folgendes ausgebildet ist:
Extrudieren der ersten Verbindung (212) durch einen ersten Extruder (30) und eine erste Zahnradpumpe (42) und in einen ersten Durchgang (122) einer Koextrusionsdüse (100);
Extrudieren der zweiten Verbindung (214) durch einen zweiten Extruder (60) und eine zweite Zahnradpumpe (44) und in einen zweiten Durchgang (124) der Koextrusionsdüse (100); und
Zusammenfügen der ersten und der zweiten Verbindung (212, 214) in dem jeweiligen ersten und zweiten Durchgang (122, 124) stromaufwärts, bevorzugt unmittelbar stromaufwärts, eines Spritzkopfauslasses (140) der Koextrusionsdüse (100).

8. Verfahren nach Anspruch 7, wobei die Koextrusionsdüse (100) einen Einsatz (120), vorzugsweise einen entfernbaren Einsatz (120), aufweist, der die Düse (100) in den ersten Durchgang (122) und in den zweiten separaten Durchgang (124) unterteilt, wobei der Einsatz (120) vorzugsweise ein distales Ende (130) zum Positionieren des distalen Endes (130) angrenzend an den Spritzkopfauslass (130) der Koextrusionsdüse (150) aufweist, wobei das distale Ende (130) einen länglichen flachen Abschnitt oder eine Nase (136) aufweist.

9. Verfahren nach wenigstens einem der vorhergehenden Ansprüche, wobei das Verhältnis des Volumens der ersten Verbindung (212) zu dem Volumen der zweiten Verbindung (214) in dem koextrudierten Streifen (210) durch ein Ändern des Geschwindigkeitsverhältnisses der ersten Zahnradpumpe (42) zu der zweiten Zahnradpumpe (44) variiert wird.

10. Verfahren nach wenigstens einem der vorhergehenden Ansprüche, wobei der koextrudierte Streifen (210) auf kontinuierliche Weise ausgebildet wird und/oder während des Wickelns auf kontinuierliche Weise aufgebracht wird.

11. Verfahren nach wenigstens einem der vorhergehenden Ansprüche, wobei der koextrudierte Streifen (210) auf kontinuierliche Weise auf eine Reifenaufbaumaschine, wie etwa eine Reifenaufbautrommel (19), oder auf eine Rohreifenkarkassenstruktur, die geformt wird, aufgebracht wird.

12. Verfahren nach wenigstens einem der vorhergehenden Ansprüche, wobei die zweite Verbindung (214) eine Kautschukzusammensetzung umfasst, die ein Scherspeichermodul G' aufweist, gemessen bei 1 % Dehnung, 1 Hz und 100 ºC gemäß ASTM D5289 in einem Bereich von 23, bis 31 MPa; und/oder wobei die erste Verbindung (212) eine Kautschukzusammensetzung umfasst, die ein Scherspeichermodul G' aufweist, gemessen bei 1 % Dehnung, 1 Hz und 100 ºC gemäß ASTMD 5289 in einem Bereich von 1,4 bis 2,3 MPa.

13. Verfahren zum Ausbilden einer Reifenkomponente, bevorzugt eines Reifenkernprofils (200), wobei das Verfahren die folgenden Schritte umfasst:
Bereitstellen einer Reifenaufbautrommel (19) oder einer Rohreifenkarkassenstruktur, die geformt wird;
Ausbilden eines koextrudierten Streifens (210), wobei der koextrudierte Streifen (210) aus einer ersten Verbindung (212) und einer zweiten Verbindung (214) besteht oder die erste Verbindung (212) und die zweite Verbindung (214) umfasst, wobei die zweite Verbindung (214) eine Verbindung ist, die sich von der ersten Verbindung (212) unterscheidet; und
Aufwickeln des koextrudierten Streifens (210) auf die Reifenaufbautrommel (19) oder die Rohreifenkarkassenstruktur, die geformt wird;
**gekennzeichnet durch**
Aufwickeln des koextrudierten Streifens (210) auf die Reifenaufbautrommel (19) oder die Rohreifenkarkassenstruktur, die geformt wird, während das Verhältnis des Volumens der ersten Verbindung (212) zu dem Volumen der zweiten Verbindung (214) in dem koextrudierten Streifen (210) variiert wird, wenn die Reifenkomponente ausgebildet wird.

14. Verfahren nach wenigstens einem der vorhergehenden Ansprüche, wobei die zweite Verbindung (214) eine Kautschukzusammensetzung umfasst, die ein Scherspeichermodul G' aufweist, gemessen bei 1 % Dehnung, 1 Hz und 100 ºC gemäß ASTM D5289 in einem Bereich von 23, bis 31 MPa; und/oder wobei die erste Verbindung (212) eine Kautschukzusammensetzung umfasst, die ein Scherspeichermodul G' aufweist, gemessen bei 1 % Dehnung, 1 Hz und 100 ºC gemäß ASTM D5289 in einem Bereich von 1,4 bis 2,3 MPa.

15. Reifenkomponente wie etwa ein Reifenkernprofil (200), wobei die Reifenkomponente aus Wicklungen eines koextrudierten Streifens (210) ausgebildet ist, wobei der koextrudierte Streifen (210) aus einer ersten Verbindung (212) und einer zweiten Verbindung (214) besteht oder die erste Verbindung (212) und die zweite Verbindung (214) umfasst, wobei die zweite Verbindung (214) eine Verbindung ist, die sich von der ersten Verbindung (212) unterschiedet, **dadurch gekennzeichnet, dass** das Verhältnis des Volumens der ersten Verbindung (212) zu dem Volumen der zweiten Verbindung (214) in dem koextrudierten Streifen (210) entlang der Reifenkomponente variiert.

## Revendications

1. Procédé destiné à la formation d'un bourrage sur tringle de type composite, le procédé comprenant les étapes dans lesquelles :
on forme une bande coextrudée (210) ; dans lequel la bande coextrudée (210) est constituée par un premier composé (212) et par un second composé (214) ou comprend ledit premier composé (212) et ledit second composé (214) ; dans lequel le second composé (214) représente un composé qui est différent du premier composé (212) ; et
on enroule la bande coextrudée (210) ;
**caractérisé par** le fait de
enrouler la bande coextrudée (210) tout en faisant varier le rapport entre le volume du premier composé (212) et le volume du second composé (214) dans la bande coextrudée (210) au cours de la formation du bourrage sur tringle (200).

2. Procédé selon la revendication 1, dans lequel le premier composé (212) représente un composé de caoutchouc et le second composé (214) représente un composé de caoutchouc.

3. Procédé selon la revendication 1 ou 2, dans lequel on modifie de manière progressive ou de manière continue le rapport entre volume du premier composé (212) et le volume du second composé (214) dans la bande coextrudée (210) au cours de l'enroulement.

4. Procédé selon au moins une des revendications précédentes, dans lequel on forme une portion interne dans la direction radiale, du bourrage sur tringle (200) à partir d'une bande coextrudée (210) qui possède de 100 % à 90 %, de préférence 95 % du premier composé (212) et de 0 % à 10 %, de préférence 5 % du second composé (214), et/ou dans lequel on forme une portion externe dans la direction radiale, du bourrage sur tringle (200) à partir d'une bande coextrudée (210) qui possède de 100 % à 90 %, de préférence 100 % du second composé (214) et de 0 % à 10 %, de préférence 0 % du premier composé (212).

5. Procédé selon au moins une des revendications précédentes, dans lequel on forme le bourrage sur tringle (200) à partir d'une double couche d'un stratifié de bande.

6. Procédé selon au moins une des revendications précédentes, dans lequel le second composé (214) est choisi afin d'obtenir une rigidité élevée et/ou possède une valeur G' qui est supérieure à celle du premier composé (212).

7. Procédé selon au moins une des revendications précédentes, dans lequel on forme la bande coextrudée (210) par le fait de :
extruder le premier composé (212) à travers une première extrudeuse (30) et à travers une première pompe à engrenages (42) ainsi que dans un premier passage (122) d'une buse de coextrusion (100) ;
extruder le second composé (214) à travers une seconde extrudeuse (60) et à travers une seconde pompe à engrenages (44) ainsi que dans un second passage (124) de la buse de coextrusion (100) ; et
joindre l'un à l'autre le premier et le second composé (212, 214) dans le premier et dans le deuxième passage respectif (122, 124) en amont, de préférence directement en amont d'une sortie de filière (140) de la buse de coextrusion (100).

8. Procédé selon la revendication 7, dans lequel la buse de coextrusion (100) possède un insert (120), de préférence un insert amovible (120) qui divise la buse (100) afin d'obtenir le premier passage (122) et le second passage séparé (124), l'insert (120) possédant de préférence une extrémité distale (130) à des fins de positionnement de l'extrémité distale (130) dans une position adjacente à la sortie de filière (130) de la buse de coextrusion (150), l'extrémité distale (130) possédant une portion plate ou un nez allongé (136).

9. Procédé selon au moins une des revendications précédentes, dans lequel on fait varier le rapport entre le volume du premier composé (212) et le volume du deuxième composé (214) dans la bande coextrudée (210) en modifiant le rapport entre la vitesse de la première pompe à engrenages (42) et la vitesse de la seconde pompe à engrenages (44).

10. Procédé selon au moins une des revendications précédentes, dans lequel on forme la bande coextrudée (210) d'une manière continue et/ou on l'applique au cours de l'enroulement d'une manière continue.

11. Procédé selon au moins une des revendications précédentes, dans lequel on applique la bande coextrudée (210) d'une manière continue sur une machine de confection de bandage pneumatique sous la forme d'un tambour de confection de bandage pneumatique (19) ou sur une structure de carcasse d'un bandage pneumatique à l'état non vulcanisé, en cours de configuration.

12. Procédé selon au moins une des revendications précédentes, dans lequel le second composé (214) comprend une composition de caoutchouc qui possède un module de conservation de la résistance au cisaillement G', que l'on mesure dans des conditions de contrainte à 1 %, de 1 Hz et à 100 °C en conformité avec la norme ASTM D5289, qui se situe dans une plage allant de 23 à 31 MPa ; et/ou dans lequel le premier composé (212) comprend une composition de caoutchouc qui possède un module de conservation de la résistance au cisaillement G', que l'on mesure dans des conditions de contrainte de 1 %, à 1 Hz et à 100 °C en conformité avec la norme ASTM D5289, qui se situe dans une plage allant de 1,4 à 2,3 MPa.

13. Procédé destiné à la formation d'un composant de bandage pneumatique, de préférence d'un bourrage sur tringle de bandage pneumatique (200), le procédé comprenant les étapes dans lesquelles :
on procure un tambour de confection de bandage pneumatique (19) ou une structure de carcasse de bandage pneumatique à l'état non vulcanisé en cours de configuration ;
on forme une bande coextrudée (210) ; dans lequel la bande coextrudée (210) est constitué par un premier composé (212) et par un second composé (214) ou comprend ledit premier composé (212) et ledit second composé (214) ; dans lequel le second composé (214) représente un composé qui est différent du premier composé (212) ; et
on enroule la bande coextrudée (210) sur le tambour de confection de bandage pneumatique (19) ou sur la structure de carcasse de bandage pneumatique à l'état non vulcanisé en cours de configuration ;
**caractérisé par** le fait de
enrouler la bande coextrudée sur le tambour de confection de bandage pneumatique (19) ou sur la structure de carcasse de bandage pneumatique à l'état non vulcanisé en cours de configuration, tout en faisant varier le rapport entre le volume du premier composé (212) et le volume du second composé (214) dans la bande coextrudée (210) au cours de la formation du composant de bandage pneumatique.

14. Procédé selon au moins une des revendications précédentes, dans lequel le second composé (214) comprend une composition de caoutchouc qui possède un module de conservation de la résistance au cisaillement G', que l'on mesure dans des conditions de contrainte à 1 %, de 1 Hz et à 100 °C en conformité avec la norme ASTM D5289, qui se situe dans une plage allant de 23 à 31 MPa ; et/ou dans lequel le premier composé (212) comprend une composition de caoutchouc qui possède un module de conservation de la résistance au cisaillement G', que l'on mesure dans des conditions de contrainte de 1 %, à 1 Hz et à 100 °C en conformité avec la norme ASTM D5289, qui se situe dans une plage allant de 1,4 à 2,3 MPa.

15. Composant de bandage pneumatique tel qu'un bourrage sur tringle de bandage pneumatique (200) ; dans lequel on obtient le composant de bandage pneumatique à partir d'enroulements d'une bande coextrudée (210) ; dans lequel la bande coextrudée (210) est constituée par un premier composé (212) et par un second composé (214) ou comprend ledit premier composé (212) et ledit second composé (214) ; dans lequel le second composé (214) représente un composé qui est différent du premier composé (212), **caractérisé en ce que** le rapport entre le volume du premier composé (212) et le volume du second composé (214) dans la bande coextrudée (210) varie tout au long du composant du bandage pneumatique.
